# EUROPEAN PATENT SPECIFICATION

(11) **EP 4 288 708 B1**
(45) Date of publication and mention of the grant of the patent: **25.12.2024**
(21) Application number: 22707843.3
(22) Date of filing: 07.02.2022
(51) Int. Cl.: F24D 17/02, F24D 19/10, F24H 15/12, F24H 15/242, F24H 15/31

(54) **METHOD OF DETERMINING A LEAK IN A WATER HEATING SYSTEM AND WATER HEATING SYSTEM**
VERFAHREN ZUR BESTIMMUNG EINER LECKAGE IN EINEM WASSERHEIZSYSTEM UND WASSERHEIZSYSTEM
PROCÉDÉ DE DÉTERMINATION D'UNE FUITE DANS UN SYSTÈME DE CHAUFFAGE D'EAU ET SYSTÈME DE CHAUFFAGE-D'EAU

(30) Priority: 07.02.2021 GB 202101678; 02.07.2021 GB 202109593; 02.07.2021 GB 202109594; 02.07.2021 GB 202109596; 02.07.2021 GB 202109597; 02.07.2021 GB 202109598; 02.07.2021 GB 202109599; 02.07.2021 GB 202109600
(43) Date of publication of application: 13.12.2023
(73) Proprietor: Octopus Energy Heating Limited, London, W1D 1NN (GB)
(72) Inventor: KONOWALCZYK, Peter, London Greater London EC1N 2HT (GB)
(74) Representative: IK-IP LTD
(86) International application number: PCT/IB2022/051083
(87) International publication number: WO 2022/168051

(56) References cited:
- EP-A2- 3 654 009
- DE-A1- 102017 100 416
- DE-C1- 3 905 054
- US-A1- 2018 245 801

## Description

The present disclosure relates generally to water heating systems in both domestic and industrial applications. In particular, the present invention relates to methods and systems for determining a leak in a water heating system to prevent a backflow from a sealed heating circuit.

### BACKGROUND

Indoor heating can be provided through a sealed central heating system, which comprises a water heater that supplies heated water to a plurality of radiating heaters fluidly connected by a plurality of pipes in a closed heating circuit. Such a sealed central heating system generally comprises, amongst other things, a pump for urging water around the heating circuit, a pressure gauge for measuring the water pressure within the heating circuit, and a filling circuit between the cold water main and a return pipe (through which water is returned from the radiating heaters to the water heater) for filling the heating circuit with cold mains water so as to increase the pressure within the heating circuit.

A sealed central heating system should operate at a predetermined range of operating pressure, and when the water pressure within the heating circuit falls below the predetermined range of operating pressure, the filling circuit is used so as to repressurise the heating circuit to the desired operating pressure. Since the central heating circuit is pressurised, to protect incoming mains water from being contaminated by a backflow from the central heating system, the filling circuit is commonly provided with an isolation valve downstream for stopping water from the heating circuit from entering the filling circuit as well as a flow control valve upstream for releasing mains water into the filling circuit.

There can be different reasons for the pressure in the heating circuit to fall, for example air being trapped in the closed heating circuit, a leak in one or more valves in the radiating heaters, a fault in one or more pipes in the heating circuit, or a fault or leak in the water heating system that heats the water of the heating circuit. If the fault or leak is in the water heating system and the heating circuit is repressurised without the fault or leak being remedied, the drop in pressure in the water heating system as a result of the fault or leak may lead to water from the heating circuit back-feeding into the water heating system, potentially causing a contamination of the mains water supply directed to other water outlets such as taps and shower.

Conventionally, to identify the cause for pressure loss, a skilled engineer would first inspect for leaks on valves and pipes around the heating circuit, and if a leak cannot be found, a test on the water heating system is performed by pressuring the system to the predetermined operating pressure then engaging the isolation valve to the heating circuit to determine whether the water heating system maintains the operating pressure. During testing of the water heating system, the water heating system is prevented from operation. If the water heating system fail to maintain the operating pressure for a sufficient length of time (e.g. a day), then the fault is deemed to lie within the water heating system.

Such manual inspections and tests are time consuming and prone to error. For example, a leak in a valve or pipe of the heating circuit may be missed during manual inspections, and the engineer is required to balance between disrupting the normal operation of the water heating system and allowing a long enough time to determine whether the water heating system is able to maintain the operating pressure, so the engineer may be required to attend the water heating system over a long period of time or a fault in the water heating system may be missed.

EP 3 654 009 discloses an arrangement for detecting and locating a leak in a water pipe system, with a water treatment, with a pump, with a supply line and a discharge line, with at least one on the supply line and the circulation line connected to the discharge line, with at least one inlet valve, at least one outlet valve and at least one pressure sensor in at least one circulation line and / or the supply line and the discharge line, the inlet valve and the outlet valve electrically controllable, with control means for controlling the input valves and the output valves, with detection means for recording the time course the measured values (P) of the at least one pressure sensor, with evaluation means for evaluating the time course of the pressure change (dP/dt) and for comparing the amount of the pressure change (dP/dt) with one Limit value and with output means for outputting a display signal indicating a leak if the amount of pressure change (dP/dt) exceeds the limit value. US 2018/245801 discloses a hydronic heating system that monitors pressure in the system, where certain pressures or variations of pressures may indicate one or more conditions in the system which may be good or adverse. DE 10 2017 100416 discloses a method for detecting a leak due to loss of a medium in an at least temporarily closable line network. A flow (V) or pressure (P) of the medium in the line network is measured. It is recognized that there is no leak if there are standstill phases (S) in which no flow (V) or pressure change (ΔP) was measured. DE 39 05 054 discloses an apparatus for monitoring a fluid conduit system for leaks. After closing a main valve that fluidly connects a fluid source to the conduit system, the time is measured for the pressure in the conduit system to drop to a predetermined first value. Upon reaching the first value a shunt valve is opened and the time is measured for the pressure to rise to a second predetermined value. The leakage flow is calculated from the two measured times and the two pressures together with known constants for the control system.

It is therefore desirable to provide improved methods and systems for determining a leakage in a water heating system to prevent a backflow from a sealed heating circuit.

### SUMMARY

The invention is defined in the independent claims, with optional features being defined in the dependent claims.
An aspect of the present technology provides a computer-implemented method of determining a leak in a water heating system, the water heating system comprising a control module configured to control operation of the water heating system, at least one water heating module configured to heat water to be circulated around a sealed heating circuit, a first valve configured to control water flow returning from the heating circuit to the water heating system and a second valve configured to control water flow from the water heating system to the heating circuit, the method being performed by the control module and comprising: receiving first sensor data from a first pressure sensor disposed upstream of the first valve; receiving second sensor data from a second pressure sensor disposed downstream of the first valve; upon determining that the first sensor data and/or the second sensor data indicates a water pressure below a reference water pressure, closing the first valve and the second valve to isolate the heating circuit and the first pressure sensor from the water heating system and the second pressure sensor; monitoring the first sensor data indicating a water pressure in the heating circuit and the second sensor data indicating a water pressure in the water heating system; and upon determining that the second sensor data indicates a fall in water pressure, determining a leak in the water heating system, wherein the water heating system comprises a third valve configured to control a flow of mains water into the heating circuit, the method further comprising, upon determining that the water pressure indicated by the first sensor data and the water pressure indicated by the second sensor data remain substantially constant, releasing the first valve and the third valve to allow mains water into the heating circuit to increase the water pressure to at least the reference water pressure.

According to the invention, it is possible to determine whether there is a leak or a fault in the water heating system when the water pressure in the heating circuit falls below the reference water pressure (or a minimum water pressure). In doing so, it is possible to give an early warning when a leak occurs to prevent more serious issues caused by a delay in detection. Moreover, if there is a leak or fault in the water heating system and the heating circuit is repressurised without the leak or fault being repaired, it can lead to a backflow from the heating circuit into the mains water feeding loop, contaminating water supply with bacteria harmful to health. Thanks to the invention, it is possible to prevent backflow by determining whether there is a leak in the water heating system before the heating circuit is repressurised.

A further aspect of the present technology provides a computer-readable medium comprising machine-readable code which, when executed by a processor, causes the processor to perform the methods described above.

A yet further aspect of the present technology provides a water heating system comprising: at least one water heating module configured to heat water to be circulated around a sealed heating circuit; a first valve configured to control water flow returning from the heating circuit to the water heating system; a second valve configured to control water flow from the water heating system to the heating circuit; a first pressure sensor configured to measure a water pressure in the heating circuit disposed upstream of the first valve; a second pressure sensor configured to measure a water pressure in the heating circuit disposed downstream of the first valve; and a control module configured to control operation of the water heating system, the control module comprising: at least one processor; and a non-transitory computer-readable medium having stored thereon software instructions that, when executed by the at least one processor, cause the control module to: receive first sensor data from the first pressure sensor; receive second sensor data from the second pressure sensor; upon determining that the first sensor data and/or the second sensor data indicates a water pressure below a reference water pressure, closing the first valve and the second valve to isolate the heating circuit and the first pressure sensor from the water heating system and the second pressure sensor; monitoring the first sensor data indicating a water pressure in the heating circuit and the second sensor data indicating a water pressure in the water heating system; and upon determining that the second sensor data indicates a fall in water pressure, determining a leak in the water heating system, further comprising a third valve configured to control a flow of mains water into the heating circuit, wherein the software instructions further cause the control module to, upon determining that the water pressure indicated by the first sensor data and the water pressure indicated by the second sensor data remain substantially constant, releasing the first valve and the third valve to allow mains water into the heating circuit to increase the water pressure to at least the reference water pressure.

Additional aspects and advantages of implementations of the present technology will become apparent from the following description, the accompanying drawings and the appended claims.

### BRIEF DESCRIPTION OF THE DRAWINGS

Embodiments of the present disclosure will now be described with reference to the accompanying drawings, in which:
Fig. 1 is a schematic system overview of a water supply branch of an exemplary water heating system;
Fig. 2 is a schematic system overview of a central heating branch of the exemplary water heating system of Fig. 1; and
Fig. 3 is a flow diagram illustrating an exemplary method of determining a leak according to an embodiment.

### DETAILED DESCRIPTION

In view of the foregoing, the present disclosure provides various approaches for determining a leak in a water heating system.

### Water Heating System

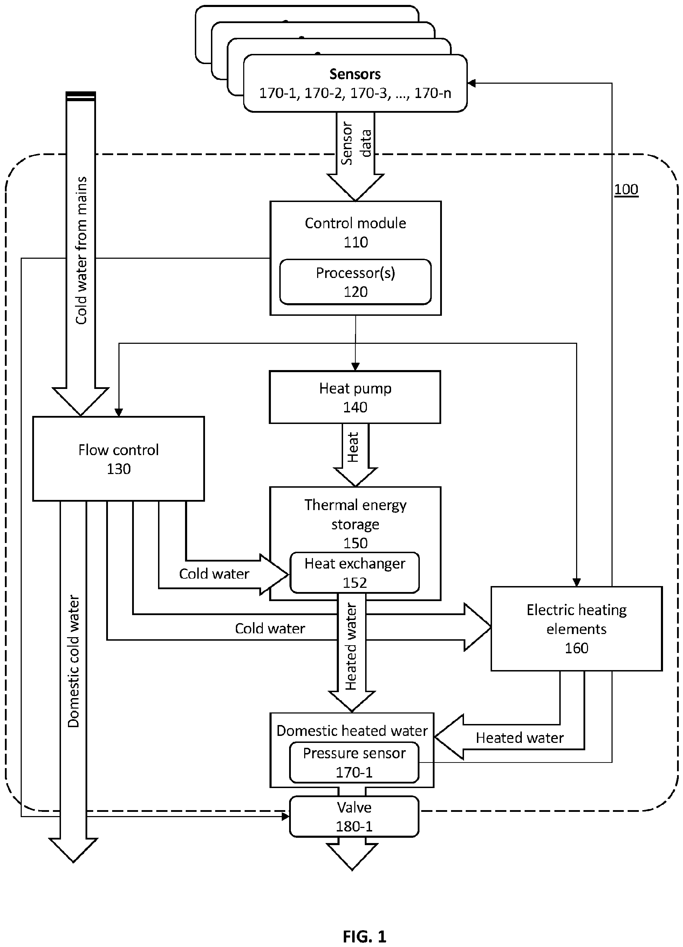

In embodiments of the present techniques, a centralized water provision/heating system provides cold and heated water to a plurality of water outlets, including taps, showers, etc. and heated water to be circulated around a sealed heating circuit to provide central heating in a building in a domestic or industrial/commercial setting. An exemplary water provision system according to an embodiment is shown in Fig. 1.

In the present embodiment, the water heating system 100 comprises a control module 110. The control module 110 is communicatively coupled to, and configured to control, various elements of the water heating system, including a flow control 130 for example in the form of one or more valves arranged to control the flow of water into, out of and around the system, a (ground source or air source) heat pump 140 configured to extract heat from the surroundings and deposit the extracted heat in a thermal energy storage 150 to be used to heat water, and one or more electric heating elements 160 configured to directly heat cold water to a desired temperature by controlling (by the control module 110) the amount of energy supplied to the electric heating elements 160. Heated water, whether heated by the thermal energy storage 150 or heated by the electric heating elements 160, is then directed to one or more water outlets as and when needed. In the embodiments, the heat pump 140 extracts heat from the surroundings into a thermal energy storage medium within the thermal energy storage 150. The thermal energy storage medium may optionally also be heated by other sources such as the electric heating elements 160 if desired. The heat pump 140 continues to deposit extracted heat to the thermal energy storage medium until it reaches a desired operation temperature, then cold water e.g. from the mains can be heated by the thermal energy storage medium in a heat exchanger 152 to the desired temperature. The heated water may then be output for distribution around a water distribution network that comprises e.g. various hot/cold water taps, shower(s), etc.

In the present embodiment, the control module 110 comprises one or more processors 120 configured to execute instructions for controlling operations of the water heating system. In particular, the control module 110 is configured to receive sensor data from a plurality of sensors 170-1, 170-2, 170-3, ..., 170-n. The plurality of sensors 170-1, 170-2, 170-3, ..., 170-n may for example include one or more air temperature sensors disposed indoor and/or outdoor, one or more water temperature sensors, one or more water pressure sensors, one or more timers, and may include other sensors not directly linked to the water provision system 100 such as one or more motion sensors, a GPS signal receiver, calendar, weather forecasting app on e.g. a smartphone carried by an occupant and in communication with the control module via a communication channel. The one or more processors 120 of the control module 110 is configured, in the present embodiment, to use the received input to perform a variety of control functions, for example controlling the flow of water through the flow control 130 to the thermal energy storage 150 or to the electric heating elements 160 to be heated.

In the present embodiment, a pressure sensor 170-1 is disposed at a position in the water heating system 100 to measure the water pressure of heated water output by the water heating system 100, and sensor data indicating the measured water pressure is received by the control module 110 which processes the sensor data and controls operation of the water heating system based on the results. A flow control e.g. valve 180-1 is disposed at a position in the water heating system 100 to control the flow of heated water output by the water heating system 100 to the water distribution network. The control module 110 is configured to control the operation of the valve 180-1 based on the received sensor data from the pressure sensor 170-1.

Embodiments of the present technology make use of a heat pump and a thermal energy storage (or heat reservoir) as a source of heat for heating cold water. While a heat pump is generally more energy efficient for heating water compared to an electrical resistance heater, a heat pump requires time to start up as it performs various checks and cycles before reaching a normal operation state, and time to transfer sufficient amount of thermal energy into a thermal energy storage medium before reaching the desired operation temperature. On the other hand, an electrical resistance heater is generally able to provide heat more immediately. Thus, a heat pump can take longer to heat the same amount of water to the same temperature compared to an electrical resistance heater. Moreover, in some embodiments, the heat pump 140 may for example use a phase change material (PCM), which changes from a solid to a liquid upon heating, as a thermal energy storage medium. Additional time may therefore be required to for the heat pump to first transferred a sufficient amount of heat to turn the PCM from solid to liquid, if it has been allowed to solidify, before it can further raise the temperature of the liquified thermal storage medium. Although this approach of heating water is slower, it consumes less energy to heat water compared to electric heating elements, so overall, energy is conserved and the cost for providing heated water is reduced.

### Phase Change Materials

In the present embodiments, a phase change material may be used as a thermal storage medium for the heat pump. One suitable class of phase change materials are paraffin waxes which have a solid-liquid phase change at temperatures of interest for domestic hot water supplies and for use in combination with heat pumps. Of particular interest are paraffin waxes that melt at temperatures in the range 40 to 60 degrees Celsius (°C), and within this range waxes can be found that melt at different temperatures to suit specific applications. Typical latent heat capacity is between about 180kJ/kg and 230kJ/kg and a specific heat capacity of perhaps 2.27Jg⁻¹K⁻¹ in the liquid phase, and 2.1Jg⁻¹K⁻¹ in the solid phase. It can be seen that very considerable amounts of energy can be stored taking using the latent heat of fusion. More energy can also be stored by heating the phase change liquid above its melting point. For example, when electricity costs are relatively low during off-peak periods, the heat pump may be operated to "charge" the thermal energy storage to a higher-than-normal temperature to "overheat" the thermal energy storage.

A suitable choice of wax may be one with a melting point at around 48°C, such as n-tricosane C₂₃, or paraffin C₂₀-C₃₃, which requires the heat pump to operate at a temperature of around 51°C, and is capable of heating water to a satisfactory temperature of around 45°C for general domestic hot water, sufficient for e.g. kitchen taps, shower/bathroom taps. Cold water may be added to a flow to reduce water temperature if desired. Consideration is given to the temperature performance of the heat pump. Generally, the maximum difference between the input and output temperature of the fluid heated by the heat pump is preferably kept in the range of 5°C to 7°C, although it can be as high as 10°C.

While paraffin waxes are a preferred material for use as the thermal energy storage medium, other suitable materials may also be used. For example, salt hydrates are also suitable for latent heat energy storage systems such as the present ones. Salt hydrates in this context are mixtures of inorganic salts and water, with the phase change involving the loss of all or much of their water. At the phase transition, the hydrate crystals are divided into anhydrous (or less aqueous) salt and water. Advantages of salt hydrates are that they have much higher thermal conductivities than paraffin waxes (between 2 to 5 times higher), and a much smaller volume change with phase transition. A suitable salt hydrate for the current application is Na₂S₂O₃·5H₂O, which has a melting point around 48°C to 49°C, and latent heat of 200-220 kJ/kg.

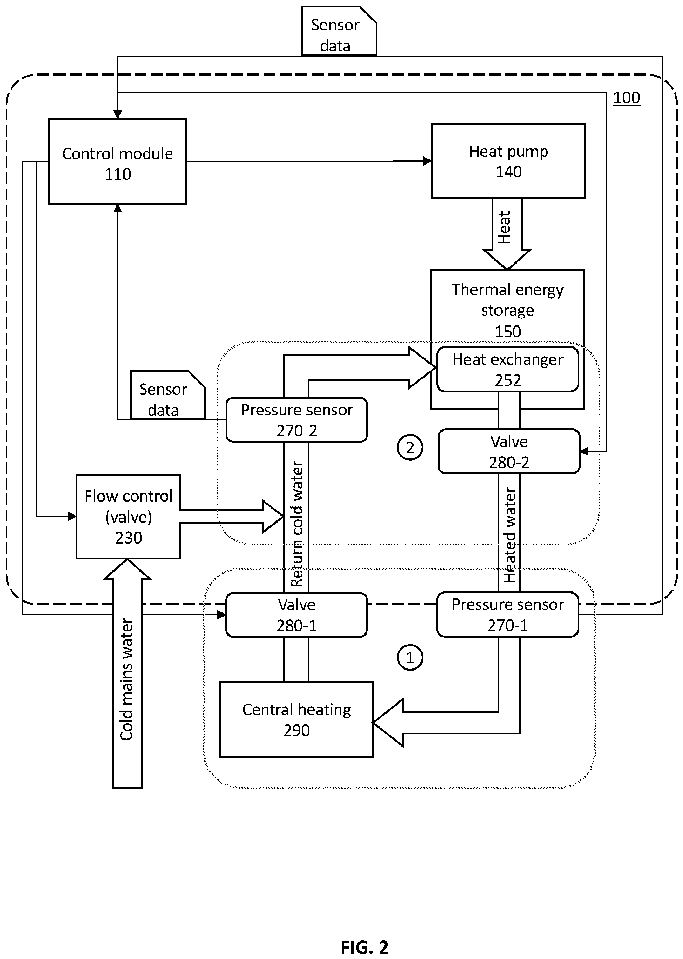

Fig. 2 shows a central heating branch of the water heating system 100 of Fig. 1. Like elements are indicated by like reference numerals. As can be seen in Fig. 2, the heating branch (heating circuit) is a sealed or closed loop comprising elements of a central heating system 190 which, for example, includes one or more radiating heating elements/modules disposed in multiple locations around the building.

Water circulating around the heating circuit is heated by heat exchanger 252 in the thermal energy storage 150, which is arranged to store thermal energy (heat) extracted from the surroundings by the heat pump 140 (optionally also received from the electric heating elements 160). Heated water is output from the water heating system 100 via a valve 280-2 (second valve) which controls the flow of the output heated water. The heated water circulates the heating circuit and dissipated by the central heating system 290 via one or more radiating heating elements. Cooled water returns from the central heating system 290 around the heating circuit to the water heating system via a valve 280-1 (first valve) which controls the flow of the returned water. The pressure of the heating circuit is measured by a first pressure sensor 270-1 and a second pressure sensor 270-2, and sensor data from the first and second pressure sensors 270-1, 270-2 is received by the control module 110, which monitors the water pressure of the heating circuit.

As can be seen in Fig. 2, the first pressure sensor 270-1 is positioned upstream of the first valve 280-1 and downstream of the second valve 280-2, while the second pressure sensor 270-2 is positioned downstream of the first valve 280-1. With this arrangement, the first and second pressure sensors 270-1, 270-2 and the first and second valves 280-1, 280-2 are positioned such that, when the first and second valves are in a closed position, the heating circuit (or central heating 290) is fluidly isolated from the water heating system, and the first pressure sensor 270-1 is in a position to measure the isolated water pressure in the heating circuit while the second pressure sensor 270-2 is in a position to measure the isolated water pressure in the water heating system.

For the central heating system to perform optimally, the water pressure within the heating circuit is preferably maintained at a level that is within an optimal operating range. If the pressure in the heating circuit falls below the operating range, the heating circuit may first be fluidly isolated by closing the first valve 280-1, and then mains water is released into the return flow by operating a third valve 230 to an open position so as to increase the water pressure in the heating circuit to a level within the optimal range.

However, there may be different causes that lead to the heating circuit losing pressure. For example, there may be a buildup of air within the heating circuit, a leak somewhere in the heating circuit, such as a valve of one of the radiating heating modules, a damaged pipe or joint, or a leak or fault somewhere in the water heating system. In cases where the loss of pressure is not a result of a fault or a leak, e.g. an air pocket in the heating circuit, then topping up the heating circuit with mains water to remove the air pocket would resolve the issue. However, in cases where the loss of pressure is caused by a fault or a leak, simply restoring the operating pressure in the heating circuit by introducing mains water into the heating circuit will not resolve the issue and may worsen the problem, such as causing further leakage and/or risking heating circuit water back-feeding to water supply (backflow).

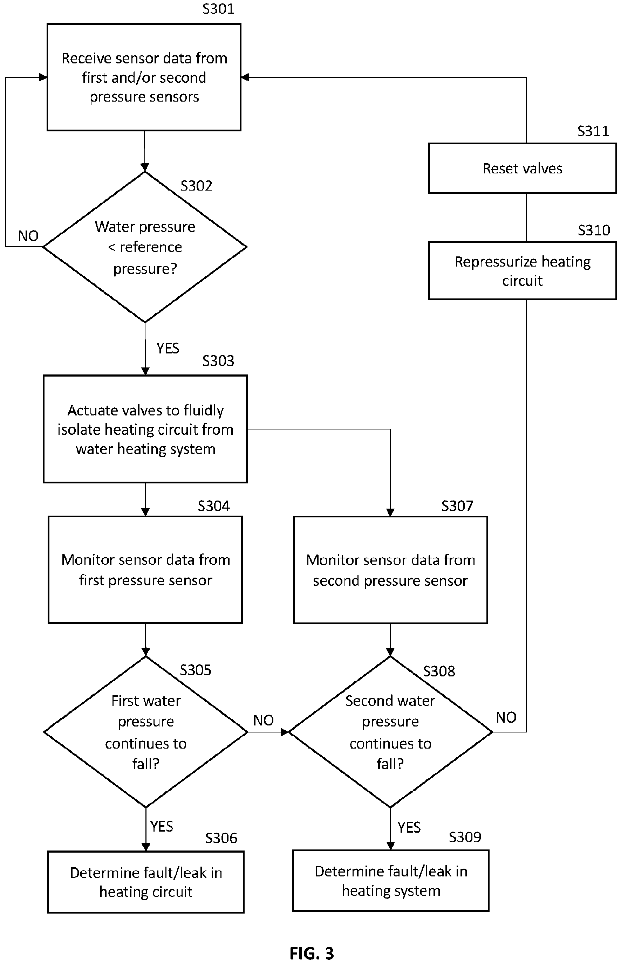

It is therefore desirable to determine if there is a leak or fault, and whether the leak or fault is in the heating circuit or the water heating system, before repressurizing the heating circuit. The water heating system 100 according to embodiments of the present disclosure enables such a determination to be made through the use of the first and second pressure sensors 270-1, 270-2 and the first and second valves 280-1, 280-2, as illustrated in Fig. 3 by way of an example.

### Active leak detection and backflow prevention

Fig. 3 shows a method of detecting water leakages in a water heating system such as the water heating system 100, according to an embodiment. The method is performed by a control unit or control module, such as the control module 110, that is configured to control operations of various elements of the water heating system. In particular, the method may be a computer-implemented method that comprises software instructions which, when executed by one or more processors, such as the one or more processors 120, performs the various steps of the method.

The method begins at S301 when the control module receives sensor data from the first pressure sensor 270-1 (first sensor data) and sensor data from the second pressure sensor 270-2 (second sensor data), indicating a water pressure in the heating circuit.

The control module compares the received first sensor data and second sensor data with a predetermined reference water pressure at S302, and upon determining that the water pressure in the heating circuit is at or above the reference water pressure (NO branch), the method returns to S301 and the control module continues to receive sensor data from the first and second pressure sensors and monitors the water pressure of the heating circuit. If, at S302, the control module determines from the first and/or second sensor data that the water pressure in the heating circuit is below the reference water pressure (YES branch), the control module outputs control signals at S303 to operate the first valve 280-1 and the second valve 280-1 to a closed position in order to fluidly isolate the heating circuit from the water heating system.

Herein, the predetermined reference water pressure may be any suitable water pressure that represents a lower threshold or minimum water pressure at which the heating circuit branch of the water heating system can operate. For example, an optimal operating water pressure, e.g. 1.5 bar, may be set by a human operator during the initial installation of the water heating system or subsequent maintenance of the water heating system and heating circuit. In some embodiments, the reference water pressure may be set at the optimal operating water pressure. However, it may be desirable to take into account of a range of normal operating conditions such as outdoor air temperature, indoor air temperature, atmospheric pressure, etc. when setting the reference water pressure. Thus, in some embodiments, a normal operating pressure range may instead be adopted to account for a normal expected deviation from the optimal operating water pressure, and the reference water pressure may be set at the lower end of the operating pressure range or at the minimum of the operating pressure range. In some embodiments, it may be desirable for the control module to adjust the reference water pressure based on operating conditions of the water heating system, or to provide recommendation or suggestion to a human operator to adjust the reference water pressure based on operating conditions of the water heating system.

After operating the first and second valves 280-1, 280-2 to the closed position at S303, the control module at 5304 continues to receive first sensor data from the first pressure sensor 270-1 to monitor the water pressure in the heating circuit (first water pressure) to determine, at S305, whether the first water pressure continues to fall. If the first water pressure continues to fall, this can be used as an indication that the isolated heating circuit is losing water despite water within the heating circuit is not being circulated. Thus, upon determining at S305 that the first water pressure continues to fall (YES branch), the control module determines at 5306 that there is a leak (or fault) in the heating circuit.

The control module further receives second sensor data from the second pressure sensor 270-2 to monitor the water pressure in the water heating system (second water pressure) at S307, and at S308, determines whether the second water pressure continues to fall. This can be performed simultaneously with, alternately, before, or after S304. If the second water pressure continues to fall, this can be used as an indication that there may be a leak or a fault in the water heating system. Thus, upon determining at S308 that the second water pressure continues to fall (YES branch), the control module determines at S309 that there is a fault or a leak in the water heating system.

The control module may simultaneously or in turn determine whether the first water pressure or the second water pressure continues to fall (S305, S308), and only when both the first water pressure and the second water pressure are determined to remain substantially constant for a sufficient length of time after operating the first and second valves 280-1, 280-2 to the closed position (NO branch), the control module repressurises the heating circuit at S310 by releasing the second valve 280-2, to allow water to flow from the water heating system to the heating circuit, while maintaining the first valve 280-1 in the closed position to prevent water from returning from the heating circuit to the water heating system, and operating the third valve 230 to introduce mains water into the return route to increase the water pressure in the heating circuit until it reaches a desired pressure, e.g. at or above the reference water pressure, the optimal operating pressure, etc. When the heating circuit has been repressurised to the desired pressure, the control module at 5311 closes the third valve 230 to stop the flow of mains water and releases the first valve 280-1 to allow normal operation of the heating circuit to resume.

According to the invention, it is possible to determine whether there is a leak in the water heating system and/or the heating circuit when the water pressure in the heating circuit falls below the reference water pressure (or a minimum water pressure). Only when it is determined that there is no leak in either the water heating system or the heating circuit would the heating circuit be repressurised. In doing so, it is possible to give an early warning when a leak occurs to prevent a more serious leak caused by late detection and/or pressurising a faulty circuit. Moreover, if there is a leak or fault in the water heating system and the heating circuit is repressurised without the leak or fault being repaired, it can lead to a backflow from the heating circuit into the mains water feeding loop, contaminating water supply with bacteria harmful to health. Through the present invention, it is possible to prevent backflow by only repressurising the heating circuit after it is determined that there is no leak in the water heating system.

In some embodiments, to determine whether the first (second) water pressure continues to fall, the control module may compare first (second) sensor data received at a first time step, T1, with first (second) sensor data received subsequently at a second time step, T2, after a predetermined time interval from T1, and determine whether the first (second) sensor data received at T2 indicates a lower water pressure than the first (second) sensor data received at T1. T1 and T2 may be any suitable and desirable time steps, for example T1 may be the time at which the first (second) water pressure is detected to fall below the reference water pressure, and T2 may be a time after a predetermined interval from T1, e.g. after 10 minutes, 30 minutes, 1 hour, 1 day, etc. Present embodiments are not limited to taking only two measurements of water pressure, three, four or more measurements may be taken, and the control module may be configured to only determine that there is a leakage in the water heating system after two, three, four or more consecutive water pressure measurements indicate a continuous fall in water pressure.

In some embodiments, the control module may be configured to only determine that there is a leakage in the heating circuit (the water heating system) when the first (second) water pressure falls below a lower water pressure threshold, or when the difference between two water pressure measurements (sensor data) is above a difference threshold.

In some embodiments, the control module may be configured to determine a rate at which the water pressure falls or decreases based on the sensor data received at T2 and T1 (and any other subsequently received sensor data). For example, the water pressure decrease rate may be determined by dividing the difference in water pressure by the corresponding time interval. In an embodiment, the thus determined water pressure decrease rate can be used to determine an extent or severity of the water leakage by comparing the determined rate with one or more rate thresholds. For example, a lower rate indicates a less severe water leakage while a higher rate indicates a more severe water leakage.

In some embodiments, upon determining at 5306 that there is a leakage in the heating circuit, and/or upon determining at S309 that there is a leakage in the water heating system, the control module may generate a warning signal to notify a human operator of the water leakage. For example, the warning signal may comprise different form and colour light signal, an audio signal such as a discrete or continuous alarm, a verbal, text or multimedia warning, or a combination thereof.

In an embodiment, the control module may be configured to only generate a warning signal when a difference between the water pressure as indicated by sensor data received at T2 and the water pressure as indicated by sensor data received at T1 exceeds a pressure drop threshold. In doing so, a human operator is only notified if and when the water leakage is deemed problematic.

In an embodiment, the control module may be configured to generate different forms of warning, such as a traffic light system, different speed of flashing light signal, different verbal warning, etc., based on the severity of the water leakage. For example, the control module may select a form of warning based on the extent of the water leakage determined by the rate at which the water pressure of the water heating system is falling. In doing so, a human operator can quickly and easily judge the severity of the leakage and take appropriate action.

In some embodiments, upon determining at 5306 that there is a leakage in the heating circuit, and/or upon determining at S309 that there is a leakage in the water heating system, the control module may provide on a display an option for a human operator to switch off the water heating system. The display may be an integrated display on the control module or an external display (e.g. a smartphone, a tablet, a computer, etc.) in communication, wirelessly or with a wired connection, with the control module. Alternatively or in addition, the control module may be configured to automatically switch off the water heating system. For example, the control module may be configured to automatically switch off the water heating system if it is determined that the water leakage is severe, and/or if a human operator has not responded to a recommendation to switch off within a predetermined time, wherein the predetermined time may be dependent on the severity or extent of the leakage.

The present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object-oriented programming languages and conventional procedural programming languages.

For example, program code for carrying out operations of the present techniques may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as VerilogTM or VHDL (Very high-speed integrated circuit Hardware Description Language).

The program code may execute entirely on the user's computer, partly on the user's computer and partly on a remote computer or entirely on the remote computer or server. In the latter scenario, the remote computer may be connected to the user's computer through any type of network. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

It will also be clear to one of skill in the art that all or part of a logical method according to the preferred embodiments of the present techniques may suitably be embodied in a logic apparatus comprising logic elements to perform the steps of the method, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

The examples and conditional language recited herein are intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its scope as defined by the appended claims.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

It will be clear to one skilled in the art that many improvements and modifications can be made to the foregoing exemplary embodiments without departing from the scope of the invention that is defined in the appended claims.

## Claims

1. A computer-implemented method of determining a leak in a water heating system (100), the water heating system (100) comprising a control module (110) configured to control operation of the water heating system (100), at least one water heating module (140, 150) configured to heat water to be circulated around a sealed heating circuit (290), a first valve (280-1) configured to control water flow returning from the heating circuit (290) to the water heating system (100) and a second valve (280-2) configured to control water flow from the water heating system (100) to the heating circuit (290) , the method being performed by the control module (110) and comprising:
receiving first sensor data from a first pressure sensor (270-1) disposed upstream of the first valve (280-1);
receiving second sensor data from a second pressure sensor (270-2) disposed downstream of the first valve (280-1);
upon determining that the first sensor data and/or the second sensor data indicates a water pressure below a reference water pressure, closing the first valve (280-1) and the second valve (280-2) to isolate the heating circuit (290) and the first pressure sensor(270-1) from the water heating system (100) and the second pressure sensor (270-2);
monitoring the first sensor data indicating a water pressure in the heating circuit (290) and the second sensor data indicating a water pressure in the water heating system (100); and
upon determining that the second sensor data indicates a fall in water pressure, determining a leak in the water heating system (100),
**characterized in that**
the water heating system (100) comprises a third valve (230) configured to control a flow of mains water into the heating circuit (290), and **in that** the method further comprises, upon determining that the water pressure indicated by the first sensor data and the water pressure indicated by the second sensor data remain substantially constant, releasing the first valve (280-1) and the third valve (230) to allow mains water into the heating circuit (290) to increase the water pressure to at least the reference water pressure.

2. The method of claim 1, further comprising, upon determining that the first sensor data indicates a fall in water pressure, determining a leak in the heating circuit.

3. The method of claim 1, further comprising, upon the water pressure in the heating circuit reaching at least the reference water pressure, closing the third valve to isolate mains water from the heating circuit and releasing the other one of the first or second valves.

4. The method of any preceding claim, further comprising generating a warning upon determining a leak in the heating circuit and/or the water heating system.

5. The method of any preceding claim, wherein monitoring the first sensor data and the second sensor data comprises one or more of:
comparing the first sensor data received at a first time step, T1, with the first sensor data received at a second time step, T2, after a predetermined time interval, and determining whether the first sensor data received at the second time step, T2, indicates a lower water pressure than the first sensor data received at the first time step, T1; and
comparing the second sensor data received at a third time step, T3, with the second sensor data received at a fourth time step, T4, after a predetermined time interval, and determining whether the second sensor data received at the fourth time step, T4, indicates a lower water pressure than the second sensor data received at the third time step, T3.

6. The method of claim 5, further comprising generating a warning when a difference between a water pressure indicated by the first sensor data received at the first time step, T1, and a water pressure indicated by the first sensor data received at the second time step, T2, exceeds a pressure drop threshold, and/or when a difference between a water pressure indicated by the second sensor data received at the third time step, T3, and a water pressure indicated by the second sensor data received at the fourth time step, T4, exceeds a pressure drop threshold.

7. The method of claim 4 or 6, wherein the warning comprises a light signal, an audio signal, a verbal, text or multimedia notification, or a combination thereof.

8. The method of any preceding claim, wherein the reference water pressure corresponds to one or more of:
a deviation from an operating water pressure for the heating circuit; and
a minimum operating pressure for the heating circuit.

9. The method of any preceding claim, further comprising adjusting the reference water pressure based on operating conditions of the water heating system, wherein the operating conditions comprise indoor ambient air temperature, outdoor air temperature, atmospheric pressure, or a combination thereof.

10. A computer-readable medium comprising machine-readable code, which, when executed by a processor, causes the processor to perform the method of any preceding claim.

11. A water heating system (100) comprising:
at least one water heating module (140, 150) configured to heat water to be circulated around a sealed heating circuit (290);
a first valve (280-1) configured to control water flow returning from the heating circuit (290) to the water heating system (100);
a second valve (280-2) configured to control water flow from the water heating system (100) to the heating circuit (290);
a first pressure sensor (270-1) configured to measure a water pressure in the heating circuit (290) disposed upstream of the first valve (280-1);
a second pressure sensor (270-2) configured to measure a water pressure in the heating circuit (290) disposed downstream of the first valve (280-1); and
a control module (110) configured to control operation of the water heating system (100), the control module (110) comprising:
at least one processor; and
a non-transitory computer-readable medium having stored thereon software instructions that, when executed by the at least one processor, cause the control module (110) to:
receive first sensor data from the first pressure sensor (270-1);
receive second sensor data from the second pressure sensor (270-2);
upon determining that the first sensor data and/or the second sensor data indicates a water pressure below a reference water pressure, closing the first valve (280-1) and the second valve (280-2) to isolate the heating circuit (290) and the first pressure sensor (270-1) from the water heating system (100) and the second pressure sensor (270-2);
monitoring the first sensor data indicating a water pressure in the heating circuit (290) and the second sensor data indicating a water pressure in the water heating system (100); and
upon determining that the second sensor data indicates a fall in water pressure, determining a leak in the water heating system (100),
**characterized in that** the water heating system comprises a third valve (230) configured to control a flow of mains water into the heating circuit (290), wherein the software instructions further cause the control module (110) to, upon determining that the water pressure indicated by the first sensor data and the water pressure indicated by the second sensor data remain substantially constant, releasing the first valve (280-1) and the third valve (230) to allow mains water into the heating circuit (290) to increase the water pressure to at least the reference water pressure.

12. The water heating system of claim 11, wherein the software instructions further cause the control module to, upon determining that the first sensor data indicates a fall in water pressure, determining a leak in the heating circuit.

13. The water heating system of claim 11 or claim 12, wherein the software instructions further cause the control module to, upon the water pressure in the heating circuit reaching at least the reference water pressure, closing the third valve to isolate mains water from the heating circuit and releasing the other one of the first or second valves.

14. The water heating system of any of claims11 to 13, wherein the one or more water heating modules comprise a heat pump (140) and a thermal energy storage (150), the heat pump (140) being configured to transfer heat from the surroundings to the thermal energy storage (150), the thermal energy storage comprising at least one heat exchanger (154) for transferring stored thermal energy to water to be circulated around the sealed heating circuit.

15. The water heating system of any of claims 11 to 14, further comprising the heating circuit, wherein the heating circuit comprises one or more radiating heating modules configured to heat an indoor area.

## Patentansprüche

1. Computerimplementiertes Verfahren zur Bestimmung eines Lecks in einem Wasserheizsystem (100), wobei das Wasserheizsystem (100) ein Steuermodul (110) umfasst, das so konfiguriert ist, dass es den Betrieb des Wasserheizsystems (100) steuert, mindestens ein Wasserheizmodul (140, 150), das so konfiguriert ist, dass es Wasser erhitzt, das um einen abgedichteten Heizkreislauf (290) zirkuliert, ein erstes Ventil (280-1), das so konfiguriert ist, dass es den vom Heizkreislauf (290) zum Wasserheizsystem (100) zurückfließenden Wasserstrom steuert, und ein zweites Ventil (280-2), das so konfiguriert ist, dass es den vom Wasserheizsystem (100) zum Heizkreislauf (290) fließenden Wasserstrom steuert, wobei das Verfahren durch das Steuermodul (110) durchgeführt wird und Folgendes umfasst:
den Empfang erster Sensordaten von einem ersten Drucksensor (270-1), der stromaufwärts des ersten Ventils (280-1) angeordnet ist;
den Empfang zweiter Sensordaten von einem zweiten Drucksensor (270-2), der stromabwärts des ersten Ventils (280-1) angeordnet ist;
wenn festgestellt wird, dass die ersten Sensordaten und/oder die zweiten Sensordaten einen Wasserdruck unterhalb eines Referenzwasserdrucks anzeigen, das Schließen des ersten Ventils (280-1) und des zweiten Ventils (280-2), um den Heizkreislauf (290) und den ersten Drucksensor (270-1) von dem Wasserheizsystem (100) und dem zweiten Drucksensor (270-2) zu isolieren;
das Überwachen der ersten Sensordaten, die einen Wasserdruck im Heizkreislauf (290) anzeigen, und der zweiten Sensordaten, die einen Wasserdruck im Wasserheizsystem (100) anzeigen; und
wenn festgestellt wird, dass die zweiten Sensordaten einen Abfall des Wasserdrucks anzeigen, die Feststellung eines Lecks im Wasserheizsystem (100),
**dadurch gekennzeichnet, dass** das Wasserheizsystem (100) ein drittes Ventil (230) umfasst, das so konfiguriert ist, dass es einen Fluss von Leitungswasser in den Heizkreislauf (290) steuert, und dass das Verfahren ferner umfasst, dass wenn festgestellt wird, dass der durch die ersten Sensordaten angezeigte Wasserdruck und der durch die zweiten Sensordaten angezeigte Wasserdruck im Wesentlichen konstant bleiben, das erste Ventil (280-1) und das dritte Ventil (230) freigegeben werden, um Leitungswasser in den Heizkreislauf (290) zu lassen, um den Wasserdruck auf mindestens den Referenzwasserdruck zu erhöhen.

2. Verfahren nach Anspruch 1, das ferner, wenn festgestellt wird, dass die ersten Sensordaten einen Abfall des Wasserdrucks anzeigen, die Feststellung eines Lecks im Heizkreislauf umfasst.

3. Verfahren nach Anspruch 1, das ferner, wenn der Wasserdruck im Heizkreislauf mindestens den Referenzwasserdruck erreicht, das Schließen des dritten Ventils, um das Leitungswasser vom Heizkreislauf zu trennen, und das Freigeben des anderen Ventils, des ersten oder des zweiten Ventils umfasst.

4. Verfahren nach einem vorhergehenden Anspruch, das ferner die Erzeugung einer Warnung bei Feststellung eines Lecks im Heizkreislauf und/oder im Wasserheizsystem umfasst.

5. Verfahren nach einem vorhergehenden Anspruch, wobei die Überwachung der ersten Sensordaten und der zweiten Sensordaten einen oder mehrere der folgenden Schritte umfasst:
Vergleichen der ersten Sensordaten, die in einem ersten Zeitschritt T1 empfangen wurden, mit den ersten Sensordaten, die in einem zweiten Zeitschritt T2 nach einem vorbestimmten Zeitintervall empfangen wurden, und Bestimmen, ob die ersten Sensordaten, die in dem zweiten Zeitschritt T2 empfangen wurden, einen niedrigeren Wasserdruck anzeigen als die ersten Sensordaten, die in dem ersten Zeitschritt T1 empfangen wurden; und
Vergleichen der zweiten Sensordaten, die in einem dritten Zeitschritt T3 empfangen wurden, mit den zweiten Sensordaten, die in einem vierten Zeitschritt T4 nach einem vorbestimmten Zeitintervall empfangen wurden, und Bestimmen, ob die zweiten Sensordaten, die in dem vierten Zeitschritt T4 empfangen wurden, einen niedrigeren Wasserdruck anzeigen als die zweiten Sensordaten, die in dem dritten Zeitschritt T3 empfangen wurden.

6. Verfahren nach Anspruch 5, das ferner das Erzeugen einer Warnung umfasst, wenn eine Differenz zwischen einem Wasserdruck, der durch die im ersten Zeitschritt T1 empfangenen ersten Sensordaten angezeigt wird, und einem Wasserdruck, der durch die im zweiten Zeitschritt T2 empfangenen ersten Sensordaten angezeigt wird, eine Druckabfallschwelle überschreitet, und/oder wenn eine Differenz zwischen einem Wasserdruck, der durch die im dritten Zeitschritt T3 empfangenen zweiten Sensordaten angezeigt wird, und einem Wasserdruck, der durch die im vierten Zeitschritt T4 empfangenen zweiten Sensordaten angezeigt wird, eine Druckabfallschwelle überschreitet.

7. Verfahren nach Anspruch 4 oder 6, wobei die Warnung ein Lichtsignal, ein Tonsignal, eine verbale, textliche oder multimediale Mitteilung oder eine Kombination davon umfasst.

8. Verfahren nach einem vorhergehenden Anspruch, wobei der Referenzwasserdruck einer oder mehreren der folgenden Größen entspricht:
einer Abweichung von einem Betriebswasserdruck für den Heizkreislauf; und
einem Mindestbetriebsdruck für den Heizkreislauf.

9. Verfahren nach einem vorhergehenden Anspruch, das ferner das Einstellen des Referenzwasserdrucks auf der Grundlage der Betriebsbedingungen des Wasserheizsystems umfasst, wobei die Betriebsbedingungen die Raumlufttemperatur, die Außenlufttemperatur, den atmosphärischen Druck oder eine Kombination davon umfassen.

10. Computerlesbares Medium mit maschinenlesbarem Code, der, wenn er von einem Prozessor ausgeführt wird, den Prozessor veranlasst, das Verfahren nach einem vorhergehenden Anspruch durchzuführen.

11. Wasserheizsystem (100), das Folgendes umfasst:
mindestens ein Wasserheizmodul (140, 150), das so konfiguriert ist, dass es Wasser erwärmt, das in einem abgedichteten Heizkreislauf (290) zirkuliert;
ein erstes Ventil (280-1), das so konfiguriert ist, dass es den vom Heizkreislauf (290) zum Wasserheizsystem (100) zurückfließenden Wasserstrom steuert;
ein zweites Ventil (280-2), das so konfiguriert ist, dass es den Wasserstrom vom Wasserheizsystem (100) zum Heizkreislauf (290) steuert;
einen ersten Drucksensor (270-1), der so konfiguriert ist, dass er einen Wasserdruck im Heizkreislauf (290) misst, der stromaufwärts des ersten Ventils (280-1) angeordnet ist;
einen zweiten Drucksensor (270-2), der so konfiguriert ist, dass er einen Wasserdruck im Heizkreislauf (290) misst, der stromabwärts des ersten Ventils (280-1) angeordnet ist; und
ein Steuermodul (110), das so konfiguriert ist, dass es den Betrieb des Wasserheizsystems (100) steuert, wobei das Steuermodul (110) Folgendes umfasst:
mindestens einen Prozessor; und
ein nichttransitorisches computerlesbares Medium, auf dem Softwarebefehle gespeichert sind, die, wenn sie von dem mindestens einen Prozessor ausgeführt werden, das Steuermodul (110) veranlassen:
erste Sensordaten von dem ersten Drucksensor (270-1) zu empfangen;
zweite Sensordaten von dem zweiten Drucksensor (270-2) zu empfangen;
wenn festgestellt wird, dass die ersten Sensordaten und/oder die zweiten Sensordaten einen Wasserdruck unterhalb eines Referenzwasserdrucks anzeigen, das Schließen des ersten Ventils (280-1) und des zweiten Ventils (280-2), um den Heizkreislauf (290) und den ersten Drucksensor (270-1) von dem Wasserheizsystem (100) und dem zweiten Drucksensor (270-2) zu isolieren;
das Überwachen der ersten Sensordaten, die einen Wasserdruck im Heizkreislauf (290) anzeigen, und der zweiten Sensordaten, die einen Wasserdruck im Wasserheizsystem (100) anzeigen; und
wenn festgestellt wird, dass die zweiten Sensordaten einen Abfall des Wasserdrucks anzeigen, die Feststellung eines Lecks im Wasserheizsystem (100),
**dadurch gekennzeichnet, dass** das Wasserheizsystem ein drittes Ventil (230) umfasst, das so konfiguriert ist, dass es einen Fluss von Leitungswasser in den Heizkreislauf (290) steuert, wobei die Softwarebefehle ferner das Steuermodul (110) dazu veranlassen, wenn festgestellt wird, dass der durch die ersten Sensordaten angezeigte Wasserdruck und der durch die zweiten Sensordaten angezeigte Wasserdruck im Wesentlichen konstant bleiben, das erste Ventil (280-1) und das dritte Ventil (230) freizugeben, um Leitungswasser in den Heizkreislauf (290) eintreten zu lassen, um den Wasserdruck auf mindestens den Referenzwasserdruck zu erhöhen.

12. Wasserheizsystem nach Anspruch 11, wobei die Softwarebefehle ferner das Steuermodul dazu veranlassen, wenn festgestellt, dass die ersten Sensordaten einen Abfall des Wasserdrucks anzeigen, ein Leck im Heizkreislauf festzustellen.

13. Wasserheizsystem nach Anspruch 11 oder Anspruch 12, wobei die Softwarebefehle ferner das Steuermodul dazu veranlassen, wenn der Wasserdruck im Heizkreislauf mindestens den Referenzwasserdruck erreicht, das dritte Ventil zu schließen, um das Leitungswasser vom Heizkreislauf zu trennen, und das andere Ventil, das erste oder das zweite Ventil freizugeben.

14. Wasserheizsystem nach einem der Ansprüche 11 bis 13, wobei ein oder mehrere Wasserheizmodule eine Wärmepumpe (140) und einen thermischen Energiespeicher (150) umfassen, wobei die Wärmepumpe (140) dazu konfiguriert ist, Wärme aus der Umgebung auf den thermischen Energiespeicher (150) zu übertragen, und wobei der thermische Energiespeicher mindestens einen Wärmetauscher (154) zum Übertragen der gespeicherten thermischen Energie auf Wasser umfasst, das im abgedichteten Heizkreislauf zirkulieren soll.

15. Wasserheizsystem nach einem der Ansprüche 11 bis 14, das ferner den Heizkreislauf umfasst, wobei der Heizkreislauf ein oder mehrere Strahlungsheizmodule umfasst, die zum Heizen eines Innenbereichs konfiguriert sind.

## Revendications

1. Procédé mis en oeuvre par ordinateur de détermination d'une fuite dans un système de chauffage d'eau (100), le système de chauffage d'eau (100) comprenant un module de commande (110) configuré pour commander le fonctionnement du système de chauffage d'eau (100), au moins un module de chauffage d'eau (140, 150) configuré pour chauffer de l'eau à faire circuler autour d'un circuit de chauffage étanche (290), une première vanne (280-1) configurée pour commander un écoulement d'eau revenant du circuit de chauffage (290) vers le système de chauffage d'eau (100) et une deuxième vanne (280-2) configurée pour commander un écoulement d'eau du système de chauffage d'eau (100) au circuit de chauffage (290), le procédé étant effectué par le module de commande (110) et comprenant :
la réception de premières données de capteur provenant d'un premier capteur de pression (270-1) disposé en amont de la première vanne (280-1) ;
la réception de secondes données de capteur provenant d'un second capteur de pression (270-2) disposé en aval de la première vanne (280-1) ;
lors de la détermination que les premières données de capteur et/ou les secondes données de capteur indiquent une pression d'eau inférieure à une pression d'eau de référence, la fermeture de la première vanne (280-1) et de la deuxième vanne (280-2) pour isoler le circuit de chauffage (290) et le premier capteur de pression (270-1) vis-à-vis du système de chauffage d'eau (100) et du second capteur de pression (270-2) ;
la surveillance des premières données de capteur indiquant une pression d'eau dans le circuit de chauffage (290) et des secondes données de capteur indiquant une pression d'eau dans le système de chauffage d'eau (100) ; et
lors de la détermination que les secondes données de capteur indiquent une chute de pression de l'eau, la détermination d'une fuite dans le système de chauffage de l'eau (100),
**caractérisé en ce que** le système de chauffage d'eau (100) comprend une troisième vanne (230) configurée pour commander un écoulement d'eau de ville dans le circuit de chauffage (290), et **en ce que** le procédé comprend en outre, lors de la détermination que la pression d'eau indiquée par les premières données de capteur et la pression d'eau indiquée par les secondes données de capteur restent sensiblement constantes, le déblocage de la première vanne (280-1) et de la troisième vanne (230) pour permettre à de l'eau de ville dans le circuit de chauffage (290) d'augmenter la pression d'eau jusqu'au moins la pression d'eau de référence.

2. Procédé selon la revendication 1, comprenant en outre, lors de la détermination que les premières données de capteur indiquent une chute de pression d'eau, la détermination d'une fuite dans le circuit de chauffage.

3. Procédé selon la revendication 1, comprenant en outre, lorsque la pression d'eau dans le circuit de chauffage atteint au moins la pression d'eau de référence, la fermeture de la troisième vanne pour isoler l'eau de ville vis-à-vis du circuit de chauffage et le déblocage de l'autre des première ou deuxième vannes.

4. Procédé selon une quelconque revendication précédente, comprenant en outre la génération d'un avertissement lors de la détermination d'une fuite dans le circuit de chauffage et/ou le système de chauffage de l'eau.

5. Procédé selon une quelconque revendication précédente, dans lequel la surveillance des premières données de capteur et des secondes données de capteur comprend une ou plusieurs étapes parmi :
la comparaison des premières données de capteur reçues à un premier pas de temps, T1, avec les premières données de capteur reçues à un deuxième pas de temps, T2, après un intervalle de temps prédéterminé, et la détermination si les premières données de capteur reçues au deuxième pas de temps, T2, indiquent ou non une pression d'eau inférieure à celle des premières données de capteur reçues au premier pas de temps, T1 ; et
la comparaison des secondes données de capteur reçues à un troisième pas de temps, T3, avec les secondes données de capteur reçues à un quatrième pas de temps, T4, après un intervalle de temps prédéterminé, et la détermination si les secondes données de capteur reçues au quatrième pas de temps, T4, indiquent ou non une pression d'eau inférieure à celle des secondes données de capteur reçues au troisième pas de temps, T3.

6. Procédé selon la revendication 5, comprenant en outre la génération d'un avertissement lorsqu'une différence entre une pression d'eau indiquée par les premières données de capteur reçues au premier pas de temps, T1, et une pression d'eau indiquée par les premières données de capteur reçues au deuxième pas de temps, T2, dépasse un seuil de chute de pression, et/ou lorsqu'une différence entre une pression d'eau indiquée par les secondes données de capteur reçues au troisième pas de temps, T3, et une pression d'eau indiquée par les secondes données de capteur reçues au quatrième pas de temps, T4, dépasse un seuil de chute de pression.

7. Procédé selon la revendication 4 ou 6, dans lequel l'avertissement comprend un signal lumineux, un signal audio, une notification verbale, textuelle ou multimédia, ou une combinaison de ceux-ci.

8. Procédé selon une quelconque revendication précédente, dans lequel la pression d'eau de référence correspond à un ou plusieurs parmi :
un écart par rapport à une pression d'eau de fonctionnement pour le circuit de chauffage ; et
une pression de fonctionnement minimale pour le circuit de chauffage.

9. Procédé selon une quelconque revendication précédente, comprenant en outre l'ajustement de la pression d'eau de référence sur la base de conditions de fonctionnement du système de chauffage d'eau, dans lequel les conditions de fonctionnement comprennent une température d'air ambiant intérieure, une température d'air extérieure, une pression atmosphérique, ou une combinaison de celles-ci.

10. Support lisible par ordinateur comprenant un code lisible par machine qui, lorsqu'il est exécuté par un processeur, amène le processeur à effectuer le procédé selon une quelconque revendication précédente.

11. Système de chauffage d'eau (100) comprenant :
au moins un module de chauffage d'eau (140, 150) configuré pour chauffer de l'eau à faire circuler autour d'un circuit de chauffage étanche (290) ;
une première vanne (280-1) configurée pour commander un écoulement d'eau revenant du circuit de chauffage (290) vers le système de chauffage d'eau (100) ;
une deuxième vanne (280-2) configurée pour commander un écoulement d'eau allant du système de chauffage d'eau (100) vers le circuit de chauffage (290) ;
un premier capteur de pression (270-1) configuré pour mesurer une pression d'eau dans le circuit de chauffage (290) disposé en amont de la première vanne (280-1) ;
un second capteur de pression (270-2) configuré pour mesurer une pression d'eau dans le circuit de chauffage (290) disposé en aval de la première vanne (280-1) ; et
un module de commande (110) configuré pour commander le fonctionnement du système de chauffage d'eau (100), le module de commande (110) comprenant :
au moins un processeur ; et
un support non transitoire lisible par ordinateur sur lequel sont stockées des instructions logicielles qui, lorsqu'elles sont exécutées par le au moins un processeur, amènent le module de commande (110) à :
recevoir des premières données de capteur du premier capteur de pression (270-1) ;
recevoir des secondes données de capteur du second capteur de pression (270-2) ;
lors de la détermination que les premières données de capteur et/ou les secondes données de capteur indiquent une pression d'eau inférieure à une pression d'eau de référence, fermer la première vanne (280-1) et la deuxième vanne (280-2) pour isoler le circuit de chauffage (290) et le premier capteur de pression (270-1) vis-à-vis du système de chauffage d'eau (100) et du second capteur de pression (270-2) ;
surveiller les premières données de capteur indiquant une pression d'eau dans le circuit de chauffage (290) et les secondes données de capteur indiquant une pression d'eau dans le système de chauffage d'eau (100) ; et
lors de la détermination que les secondes données de capteur indiquent une chute de pression de l'eau, déterminer une fuite dans le système de chauffage de l'eau (100),
**caractérisé en ce que** le système de chauffage d'eau comprend une troisième vanne (230) configurée pour commander un écoulement d'eau de ville dans le circuit de chauffage (290), dans lequel les instructions logicielles amènent en outre le module de commande (110), lors de la détermination que la pression d'eau indiquée par les premières données de capteur et la pression d'eau indiquée par les secondes données de capteur restent sensiblement constantes, à débloquer la première vanne (280-1) et la troisième vanne (230) pour permettre à de l'eau de ville dans le circuit de chauffage (290) d'augmenter la pression d'eau au moins jusqu'à la pression d'eau de référence.

12. Système de chauffage d'eau selon la revendication 11, dans lequel les instructions logicielles amènent en outre le module de commande, lors de la détermination que les premières données de capteur indiquent une chute de pression d'eau, à déterminer une fuite dans le circuit de chauffage.

13. Système de chauffage d'eau selon la revendication 11 ou la revendication 12, dans lequel les instructions logicielles amènent en outre le module de commande, lorsque la pression d'eau dans le circuit de chauffage atteint au moins la pression d'eau de référence, à fermer la troisième vanne pour isoler l'eau de ville vis-à-vis du circuit de chauffage et à débloquer l'autre des première ou deuxième vannes.

14. Système de chauffage d'eau selon l'une quelconque des revendications 11 à 13, dans lequel les un ou plusieurs modules de chauffage d'eau comprennent une pompe à chaleur (140) et un stockage d'énergie thermique (150), la pompe à chaleur (140) étant configurée pour transférer de la chaleur de l'environnement au stockage d'énergie thermique (150), le stockage d'énergie thermique comprenant au moins un échangeur de chaleur (154) pour transférer de l'énergie thermique stockée à de l'eau à faire circuler autour du circuit de chauffage étanche.

15. Système de chauffage d'eau selon l'une quelconque des revendications 11 à 14, comprenant en outre le circuit de chauffage, dans lequel le circuit de chauffage comprend un ou plusieurs modules de chauffage par rayonnement configurés pour chauffer une zone intérieure.
